# EUROPEAN PATENT APPLICATION

(11) **EP 4 647 276 A1**
(43) Date of publication of application: **12.11.2025**
(21) Application number: 25174463.7
(22) Date of filing: 06.05.2025
(51) Int. Cl.: B60G 17/00, B60G 17/018, B60H 1/00, F16F 9/42

(54) **MOTOR VEHICLE PROVIDED WITH ACTIVE SUSPENSIONS AND WITH A HEAT EXCHANGE SYSTEM FOR MANAGING HEAT OF SUCH ACTIVE SUSPENSIONS**

(30) Priority: 09.05.2024 IT 202400010462
(71) Applicant: FERRARI S.p.A., 41100 Modena (IT)
(72) Inventor: PEZZATI, Andrea, 41100 MODENA (IT); D'ANGELO, Enrico, 41100 MODENA (IT)
(74) Representative: Studio Torta S.p.A.

(57) **Abstract**

A motor vehicle (1) has a metal frame (3;27), active suspensions (5,6) for supporting respective wheels, and a heat exchange system (21) for managing heat of at least one component of the active suspensions (5,6); the heat exchange system (21) is provided with a heat exchange circuit (8), which has a pump (9) for supplying a heat exchange liquid, a heat exchanger (10), at least one heat exchange segment (11) in the active suspensions (5,6), a return branch (12) from the active suspensions (5,6) towards the pump (9), and a delivery branch (13) from the pump (9) towards the active suspensions (5,6); at least one of the return and delivery branches (12,13) comprises a metal pipe (25), which is free of thermal insulators and is arranged along the metal frame (3) to transfer heat to the latter; in particular, the heat exchange is adjusted by varying the speed of the pump (9).

## Description

### Cross-reference to related applications

This patent application claims priority from Italian patent application no. 102024000010462 filed on May 9, 2024, the entire disclosure of which is incorporated herein by reference.

### Technical field

The invention relates to a motor vehicle, which is provided with active suspensions and with a heat exchange system for managing heat of such active suspensions, according to the preamble of claim 1.

### Background

As it is known, some motor vehicles are provided with active suspensions, in which electric and/or electronic components are integrated. These components require a heat exchange system to adjust their temperature during operation, in order to maintain it within an optimal operating range, for example between 15°C and 55°C.

This system generally comprises an oil cooling circuit, which is configured so as to get heat from said electric/electronic components and is connected to a heat exchanger, which, in turn, allows the circulating oil to cool, for example by transferring heat to an air flow.

The oil cooling circuit needs to be integrated with other heat management systems available in the motor vehicle, so as to be able to recover, as much as possible, the heat taken from the active suspensions, at least in some operating conditions.

To this aim, by means of the aforesaid heat exchanger, it is possible to transfer the heat of the oil to a heat exchange liquid (for example, a mixture of water and glycol), which flows in a second circuit designed to cool/heat other thermal utilities, for example the air conditioning of the passenger compartment. In this specific example, in case of relatively cold external environmental conditions, the heat produced by the active suspensions can be recovered to heat the passenger compartment.

At the same time, it is also necessary to consider the operating conditions in which the heat exchange liquid of the second circuit is already hot, so that it cannot remove heat from the oil that cools the active suspensions. In other words, the heat of the suspensions needs to be dissipated in a flexible manner, without negatively affecting the other thermal users and/or the effectiveness of the second circuit where the heat exchange liquid circulates and, preferably, by means of a solution that is relatively simple and cheap in terms of structure, number of components and layout of the circuits for the heat exchange.

Therefore, aim of the invention is to provide a motor vehicle that is able to fulfil the needs discussed above.

### Summary

According to the invention, there is provided a motor vehicle as defined in the appended claims.

### Brief description of the drawings

The invention will be best understood upon perusal of the following detailed description of embodiments thereof, by mere way of non-limiting example, with reference to the accompanying drawings, in which:
- figure 1 is a block diagram showing a preferred embodiment of the motor vehicle provided with active suspensions and with a heat exchange system for managing heat of such active suspensions according to the invention;
- figure 2 is a view from the bottom showing the motor vehicle schematically represented in figure 1, in a schematic manner and with parts removed for greater clarity;

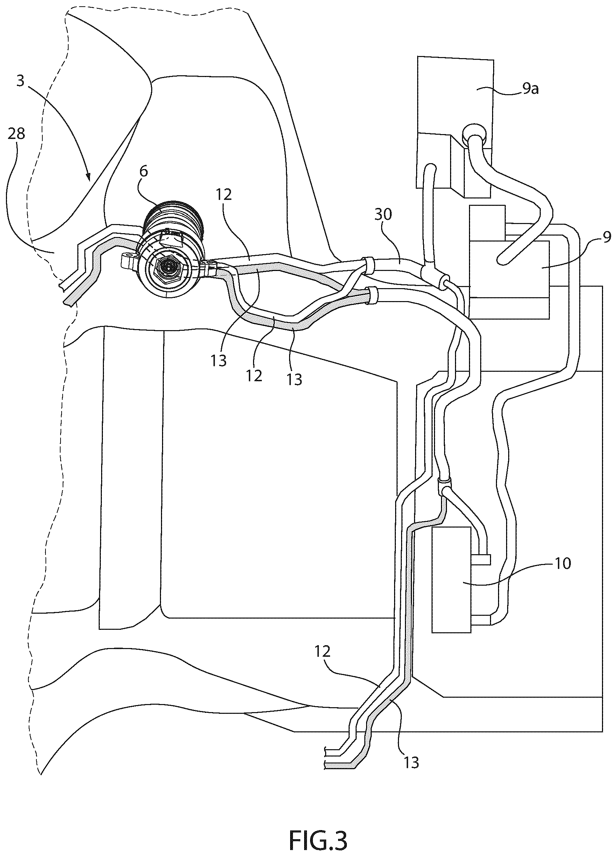

- figure 3 is a three-quarter perspective from the bottom showing a detail of the motor vehicle of figure 2, on a larger scale;
- figure 4 shows, on a further larger scale, a side member of the motor vehicle a in cross-sectional view according to the transverse cross-section plane IV-IV of figure 2;
- figure 5 is a diagram relating to a preferred adjustment mode, carried out on the heat exchange system of the motor vehicle schematically shown in figure 1; and
- figure 6 is similar to figure 4 and shows a variant according to the invention.

### Description of preferred embodiments

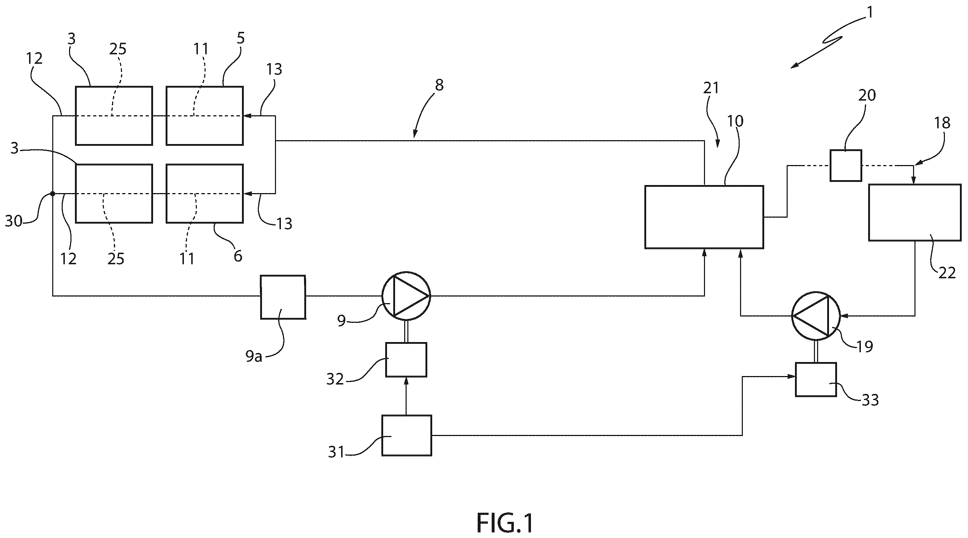

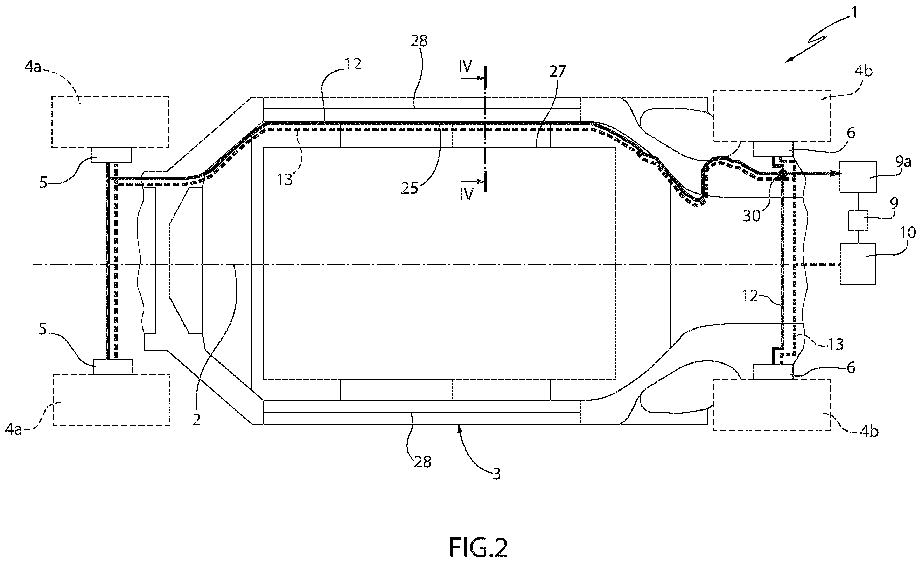

In figures 1 and 2, reference number 1 indicates, as a whole, a motor vehicle, which is partially and schematically shown. As shown in figure 2, the motor vehicle 1 extends along a longitudinal axis 2 and comprises: a metal frame 3 (partially shown), for example made of aluminium alloy; an outer body (not shown) supported by the frame 3; two front wheels 4a and two rear wheels 4b.

The front and rear wheels 4a, 4b are supported by the frame 3 through front active suspensions 5 and rear active suspensions 6 (schematically illustrated), respectively, so as to adjust the height position as a function of the load and the road roughness.

The suspensions 5 and 6 are of the known kind and comprise a component having a temperature which, in use, must be maintained within a predefined operating range, namley a target range or setpoint range between a minimum value and a maximum value, for example between 15°C and 55°C. In particular, said component comprises an electric component (e.g. an electric actuator or electric motor) and/or an electronic component (e.g. an electronic control board).

To manage/adjust the temperature of said component, the suspensions 5 and 6 are crossed, in use, by a first heat exchange liquid, typically defined by oil, which circulates in a circuit 8 schematically shown in figure 1. The circuit 8 comprises a pump 9, a heat exchanger 10, which is arranged in series with respect to the pump 9 (for example downstream of the latter), and an oil tank 9a, which is arranged immediately upstream of the pump 9. For each suspension 5 and 6, the circuit 8 further comprises: a segment 11 internal to the suspension 5,6, which is configured so as to release and/or retrieve heat through the circulating oil; a return branch 12, in which oil flows, in use, from the corresponding segment 11 towards the pump 9; and a delivery branch 13, in which oil flows, in use, from the pump 9 towards the corresponding segment 11.

The motor vehicle 1 further comprises a circuit 18, partially shown and not described in detail, in which a second heat exchange liquid, for example water or a mixture of water and glycol, circulates, due to the thrust of a pump 19, to adjust the temperature of one or more thermal utilities 20. The latter, for example, can be defined by an air conditioning system for the air circulating in a cabin or a passenger compartment of the motor vehicle 1 and/or by electric and/or electronic components (motor, inverter, battery, etc.) of an electric powertrain system.

The circuits 8 and 18 are integrated with one another so as to form, together, a heat exchange system 21: indeed, the heat exchanger 10 is common to both circuits 8 and 18 and defines an interface for exchanging heat between the oil of the circuit 8 and the liquid (water) of the circuit 18. In this way, the heat removed from the suspensions 5,6 can be released to the circuit 18 and recovered to heat the thermal utilities 20, if necessary.

In particular, the circuit 18 comprises at least one heat exchanger 22, for example a liquid/air radiator, for dissipating any excess heat, which was previously retrieved by means of the first heat exchange liquid from the thermal utilities 20 and/or from the heat exchanger 10.

According to the invention, at least one of the return branches 12 and of the delivery branches 13 comprises a metal pipe 25, for example made of aluminium, which lacks thermal insulation coatings and extends near the frame 3, in a position such as to transfer heat to the latter:
- through direct contact of the pipe 25 against the frame 3; or
- through the interposition of a thermally conductive material, which couples the pipe 25 to the frame 3; or
- through an air empty space, or "air gap", with a maximum distance of 5 mm between the pipe 25 and the frame 3 (so that this empty space is sufficiently small to still allow heat to be transferred to the frame 3).

Preferably, the pipe 25 constitutes part of the return branches 12, whereby it transfers heat to the frame 3 starting from the oil that just came out of the suspensions 5 and/or 6.

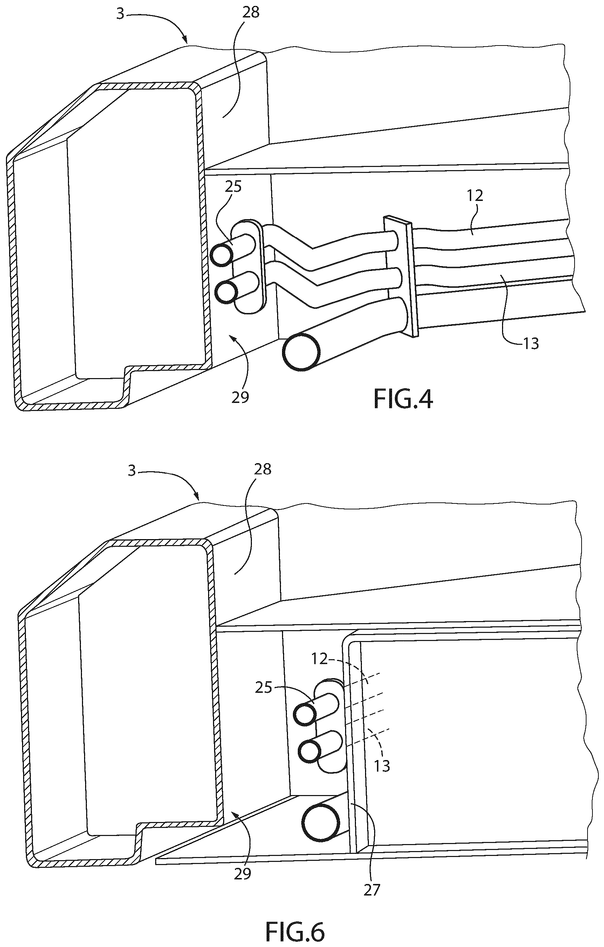

In the specific embodiment shown in figure 2, the frame 3 comprises two side members 28, which longitudinally extend along the opposite side edges of the motor vehicle 1, in the area of a floor or floorboard of the motor vehicle 1. With reference to figure 4, the pipe 25 longitudinally extends alongside one of the side members 28 (along a face 29 facing inwards, namely towards the middle line of the motor vehicle 1) so as to transfer heat to the side member 28 itself. Thanks to this location, the pipe 25 can have a relatively long length, thus maximizing the amount of heat that can be transferred to the frame 3. In this case, therefore, the frame 3 also performs a heat sink function for the heat released by the oil flowing in the pipe 25.

In general, the pipe 25 can also release heat to a different frame, which is distinct from the frame 3 described above and is fixed to the latter. For example, in the variant shown in figure 6, the pipe 25 is arranged near a frame 27 that supports and houses a battery pack of the motor vehicle 1, under the floorboard between the two side members 28. In particular, the frame 27 is provided with a cooling system (not shown) for adjusting the temperature of the battery pack, whereby the temperature of the frame 27, during use, is relatively low.

According to another alternative, which is not shown herein, the frame to which the oil of the circuit 8 releases heat can be defined by a support structure, also called "subframe", which supports the motor-engine and/or an axle, for example the rear axle, of the motor vehicle 1.

Preferably, with reference to figure 2, the pipe 25 provided along the side member 28 (or along the frame 27, as shown in the variant of figure 6) connects the front suspensions 5 to the heat exchanger 10, which is located in a rear area of the motor vehicle 1. Preferably, for the rear suspensions 6 there is provided at least one metal pipe 25, as well, arranged so as to transfer heat to a frame portion, albeit with a relatively short length (due to the proximity of the heat exchanger 10 to the suspensions 6). For example, the layout of the circuit 8 is designed in such a way that, considering the total amount of heat released to the frame 3, about 90-95% is released by the oil coming from the suspensions 5 and the remaining part, namely 5-10%, is released by the oil coming from the suspensions 6. The oil flows respectively coming from the suspensions 5 and 6 along the return branches 12, once cooled by the frame in "parallel", namely independently of one another, tend to have different temperatures, but both flow, through at least one joining element 30, into the oil tank 9a, where they are mixed to then form one single flow, which is pumped to the heat exchanger 10 and tends to have an intermediate temperature with respect to the source flows.

In the preferred implemented solution, the metal pipe 25, made of aluminium, constitutes part of the return branch 12 from the front suspension 5, as already mentioned above, whereas the delivery branch 13 is obtained by means of pipes made of a thermally insulating plastic material; in this way, the temperatures of the oil flows relating to the four suspensions are relatively balanced. However, as mentioned above, other configurations could be envisaged, depending on the actual attitude adjustments that are set.

Owing to the above, it is evident that the heat exchange in the area of the frame 3 and the heat exchange in the area of the heat exchanger 10 are arranged in series with one another, considering the direction in which the oil is supplied by the pump 9 in the circuit 8.

In order to adjust the overall amount of heat exchanged by the oil circulating in the circuit 8, the heat exchange system 21 comprises a control unit 31, schematically shown in figure 1 and configured so as to vary the flow rate supplied by the pump 9 in the circuit 8, for example as a function of a parameter indicative of an amount of heat to be transferred in the area of the heat exchanger 10 and/or in the area of the pipe(s) 25. For example, the control unit 31 acts upon a motor 32, which operates the pump 9, so as to vary its rotation speed.

Preferably, this adjustment is carried out so as to maintain the oil flow rate at a value that is greater than or equal to a minimum threshold, during the operation of the motor vehicle 1, for example a threshold of about 2 l/min.

Obviously, the amounts of heat exchanged in the circuit 8 depend not only on the flow rate of the oil, but also on its temperature, on that of the suspensions 5 and 6, on that of the frame 3 and on that of the liquid in the circuit 18 upstream of the heat exchanger 10. At least some of these temperatures are determined by means of suitable sensors, known and not shown, which may be of a virtual nature (i.e. temperature sensors defined by algorithms that determine the temperature not as a direct measurement, but as an estimate based on other measurements), and are then processed by the control unit 31.

Alternatively to or in combination with the flow rate adjustment of the pump 9, the control unit 31 is configured so as to adjust the flow rate supplied by the pump 19 (for example, as a function of the aforementioned parameter) to vary the amount of heat exchanged in the heat exchanger 10; for example, the control unit 31 acts upon a motor 33, which operates the pump 19, so as to vary its rotation speed. More preferably, the flow rate adjustments of the pump 9 and of the pump 19 are combined and simultaneous with one another, so as to have two degrees of freedom in adjusting the amounts of heat exchanged along the circuit 8.

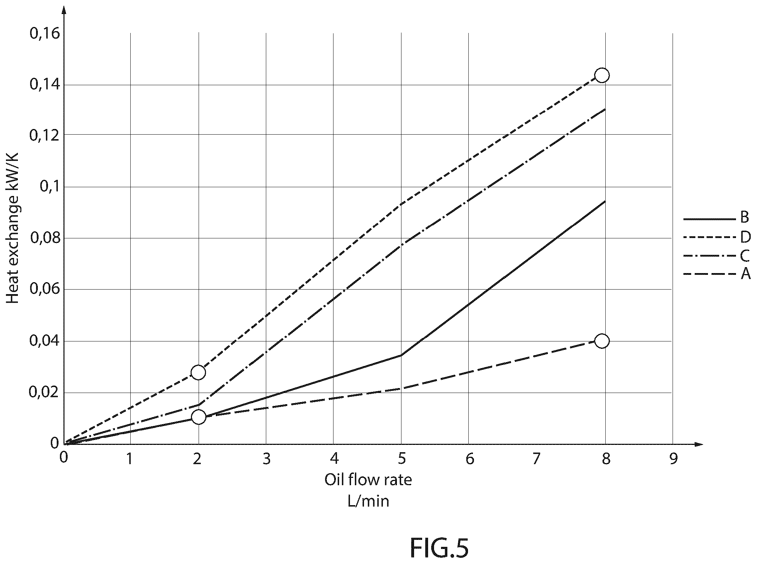

The diagram of figure 5 visually shows how the adjustment of the flow rates in the circuits 8 and 18 affects the extent of the heat exchange. The abscissa axis indicates the flow rate of the pump 9, the ordinate axis indicates the thermal power per temperature unit that is exchanged by the first cooling fluid, i.e. by the oil in the circuit 8, following the passage in the pipe(s) 25 along the frame 3 and the passage in the heat exchanger 10. The diagram shows a series of curves, respectively indicated by A, B, C and D, which respectively relate to:
A) heat exchange values in the area of the frame 3;
B) heat exchange values in case the flow rate of the pump 19 of the circuit 18 is 5 l/min;
C) heat exchange values in case the flow rate of the pump 19 of the circuit 18 is 10 l/min;
D) heat exchange values in case the flow rate of the pump 19 of the circuit 18 is 15 l/min;
wherein the amount of heat exchanged in the area of the heat exchanger 10 is defined by the difference, along the ordinate axis, between the curve B, C or D (chosen based on the actual operating condition of the circuit 18, namely based on the flow rate of the pump 19) with respect to the curve A.

Generally speaking, the flow rate of the pump 19 depends on factors relating to the operation of the circuit 18, so that it is not always possible to perform an adjustment on it: with the same flow rate in the circuit 18, it is evident from the diagram of figure 5 that, by varying the flow rate in the abscissa, which relates to the pump 9, the ratio between the heat exchange extent in the heat exchanger 10 and the extent in the area of the frame 3 is significantly varied. In particular, by reducing the flow rate of the pump 9, the heat exchange extent in the area of the frame 3 becomes more relevant in percentage with respect to the extent in the heat exchanger 10; this greater relevance becomes even more important considering that the temperature of the frame 3 substantially corresponds to the temperature of the external environment (usually 10-15 °C) and that it can be considered substantially constant, so that it is able to cool the oil in the circuit 18 in almost all operating conditions.

Consequently, minimizing the flow rate of the pump 9 is advantageous when the temperature of the liquid in the circuit 18 is relatively high and the heat exchanger 10 has to be prevented from heating the oil of the circuit 8. Consider the following example:
- temperature of the liquid in the circuit 18: 55 °C;
- temperature of the frame: 15 °C;
- temperature of the oil coming out of the suspensions: 45 °C;
therefore, the temperature difference of the oil is 30 °C with respect to the frame and 10 °C with respect to the liquid of the circuit 18; hence, with an oil flow rate of 2 l/min, the heat exchange in the area of the frame is about -0.3 kW, whereas in the area of the heat exchanger 10 it is about +0.2 kW, with a total balance that is negative and, thus, leads to a cooling of the oil; on the contrary, with an oil flow rate of 8 l/min, the heat exchange in the area of the frame is about -1.2 kW, whereas in the area of the heat exchanger 10 it is about +1.5 kW, with a total balance that is positive and, thus, leads to a further unwanted heating of the oil in the circuit 8.

On the other hand, maximizing the flow rate of the pump 9 can be advantageous when the suspensions are in initial "cold" conditions, i.e. below a minimum temperature threshold. Indeed, in these conditions, the oil of the circuit 8 and, therefore, the suspensions can be heated, maximizing the heat exchange in the area of the heat exchanger 10.

The adjustment of the oil flow rate involves a nonsignificant variation in the heat exchange inside the suspensions 5,6, so that this variation can be neglected to a first approximation.

The adjustment of the flow rate of the pump 9 (and, if necessary, of the pump 19) is advantageous also because it avoids the installation of control valves along the circuit 8, for example valves for by-passing the heat exchanger 10 when the temperature of the liquid in the circuit 18 is high, whereby a relatively simple and cheap solution is obtained.

The control unit 31 is configured with control logics that control the adjustment of the pumps 9 and/or 19 so as to adapt the operation of the system 21 to the different operating conditions of the motor vehicle 1. For example, the following control logic is implemented in the control unit 31:
- if the temperature of the oil in the circuit 8 is lower than a minimum threshold (for example 15 °C), the control unit 31 checks whether the liquid in the circuit 18 has conditions (temperature, flow rate, etc.) such as to provide heat to the oil in the heat exchanger 10, as well as to the thermal utilities 20: if so, the flow rate of the pump 9 is increased; if not, on the other hand, it is reduced and, preferably, minimized;
- if the temperature of the oil of the circuit 8 is higher than the lower threshold and lower than an upper threshold (for example 20 °C), the conditions of the oil are optimal and, therefore, the flow rate of the pump 9 is minimized by the control unit 31, in particular to limit consumption;
- if the temperature of the oil of the circuit 8 is higher than the upper threshold, the control unit 31 checks whether the temperature of the liquid in the circuit 18 is lower than the one of the oil in order to be able to remove heat in the heat exchanger 10: if so, the flow rate of the pump 9 is increased by the control unit 31; if not, on the other hand, it is reduced and, preferably, minimized, in order to limit heating in the area of the heat exchanger 10 and, hence, to increase in percentage the amount of heat released in the area of the frame 3, as described above with reference to figure 5.

The advantages achieved by the invention are evident from the description above.

First of all, it is possible to exploit the frame 3, or another support frame that is part of the motor vehicle 1, to cool the oil of the circuit 8 and keep its temperature below a maximum threshold. In particular, the frame 3 has a thermal capacity that is relatively high and is naturally cooled by the external environment (in particular, when the motor vehicle 1 is moving), so that it can be considered to have a constant temperature, which is the same as the one of the external environment itself: it is therefore an ideal component to fulfil the function of a heat sink. Specifically, the use of the side members 28 is particularly advantageous in order to maximize the amount of heat released to the frame 3, thanks to the length of the side members 28 themselves, with a relatively simple layout of the circuit 8. Alternatively to the side members 28, as shown in figure 6, it can be advantageous to exploit the frame 27, which carries the battery pack and is normally subject to cooling during use.

Secondly, it is possible to recover the heat of the oil in the heat exchanger 10, to heat the liquid circulating in the circuit 18, if necessary. In the context of this integration between the circuits 8 and 18, the variation of the flow rate of the pump 9 and, if necessary, that of the pump 19 becomes relevant in order to adjust the heat exchanges by means of a simple solution, with a relatively small number of components.

Further advantages can be understood by a person skilled in the art based on the information disclosed above.

Finally, it is clear that the motor vehicle 1 described with reference to the accompanying figures can be subject to changes and variations, without for this reason going beyond the scope of protection of the invention defined in the appended claims.

In particular, the layout of the branches 12 and 13 of the circuit 8 and, therefore, the layout of the pipes 25 could be different from the ones indicated above by way of example.

## Claims

1. Motor vehicle (1) comprising:
- a metal frame (3;27);
- active suspensions (5,6) for supporting respective wheels (4a,4b) relative to said metal frame (3);
- a heat exchange system (21) for managing heat of at least one component of said active suspensions (5,6);
wherein said heat exchange system (21) comprises a first heat exchange circuit (8), in which a first heat exchange liquid circulates, in use; said first heat exchange circuit (8) comprising:
- a first pump (9) for supplying said first heat exchange liquid,
- a heat exchanger (10),
- at least one heat exchange segment (11) in said active suspensions (5,6),
- at least one return branch (12), in which the first heat exchange liquid flows from said active suspensions (5,6) towards said pump (9), and
- at least one delivery branch (13), wherein the first heat exchange liquid flows from said pump (9) towards said active suspensions (5,6);
**characterized in that** at least one of said return branch (12) and delivery branch (13) comprises a metal pipe (25) which is free of thermal insulators and is arranged along said metal frame (3;27) in such a way as to transfer heat towards said metal frame (3;27).

2. The motor vehicle according to claim 1, wherein said heat exchange system (21) further comprises a control unit (31) configured to vary the flow rate supplied by said first pump (9).

3. The motor vehicle according to claim 2, wherein said control unit (31) is configured to vary a rotation speed of said first pump (9).

4. The motor vehicle according to claim 2 or 3, wherein said control unit (31) is configured to maintain the flow rate of said first pump (9) above a minimum value, greater than zero, during operation of the motor vehicle (1).

5. The motor vehicle according to any one of the preceding claims, wherein said metal pipe (25) is coupled to said metal frame (3), either directly by contact or by a heat conductive material.

6. The motor vehicle according to any one of claims 1 to 4, wherein said metal pipe (25) is spaced from said metal frame (3) by an air gap having a width of 5 mm or less.

7. The motor vehicle according to any one of the preceding claims, wherein said metal pipe (25) forms part of said return branch (12).

8. The motor vehicle according to any one of the preceding claims, wherein said active suspensions (5,6) comprise active front suspensions (5) and active rear suspensions (6), said metal pipe (25) being associated with said active front suspensions (5).

9. The motor vehicle according to any one of the preceding claims, wherein said metal frame (3) comprises two side members (28) extending longitudinally along opposite sides of the motor vehicle (1); and wherein said metal pipe (25) extends along at least one of said side members (28).

10. The motor vehicle according to claim 9, wherein said side members (28) extend along opposite side edges of a floor of the motor vehicle (1); said metal pipe (25) being arranged along a face (29) of the side member facing the inside of the motor vehicle (1).

11. The motor vehicle according to any one of claims 1 to 8, wherein said metal frame (27) is a frame supporting a battery pack, arranged below a floor of the motor vehicle (1).

12. The motor vehicle according to any one of the preceding claims, wherein said heat exchange system (21) further comprises a second heat exchange circuit (18), in which a second heat exchange liquid circulates, in use, for cooling/heating at least one thermal user (20) located along said second heat exchange circuit (18); said second heat exchange circuit (18) comprising:
- a second pump (19) for supplying said second heat exchange liquid, and
- said heat exchanger (10), which is configured to exchange heat between said first and second heat exchange liquids.

13. The motor vehicle according to claim 12, wherein said heat exchange system (21) comprises a control unit (31) configured to adjust the flow rate supplied by said second pump (19).

14. The motor vehicle according to claim 13, wherein said control unit (31) is configured to vary a rotation speed of said second pump (19).

15. The motor vehicle according to claim 13 or 14, wherein said control unit (31) is configured to adjust a flow rate supplied by said first pump (9) in combination with adjusting the flow rate of said second pump (19).
